(19) 

Europäisches Patentamt
European Patent Office
Office européen des brevets

(11) **EP 4 787 561 A1**

(12) **EUROPEAN PATENT APPLICATION**
published in accordance with Art. 153(4) EPC

(43) Date of publication:
05.08.2026  Bulletin 2026/32

(51) International Patent Classification (IPC):
*H01M 50/147* (2021.01)  *H01M 50/169* (2021.01)

(21) Application number: 24869745.0

(22) Date of filing: 15.05.2024

(52) Cooperative Patent Classification (CPC):
**H01M 50/147; H01M 50/169;** Y02E 60/10

(86) International application number:
**PCT/CN2024/093497**

(87) International publication number:
**WO 2025/066179 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.09.2023  CN 202311277374

(71) Applicant: **SVOLT Energy Technology Co., Ltd.
Changzhou, Jiangsu 213200 (CN)**

(72) Inventor: **XU, Lei
hangzhou, Jiangsu 213200 (CN)**

(74) Representative: **Michalski Hüttermann & Partner
mbB
Kaistraße 16A
40221 Düsseldorf (DE)**

(54) **COVER PLATE STRUCTURE AND BATTERY**

(57)    The present disclosure relates to the field of battery structures, and in particular to a cover plate structure and a battery. The cover plate structure is configured to connect to a housing of the battery. The cover plate structure comprises a cover plate body and a connecting flange, a circle of the connecting flange is arranged on the circumferential edge of the cover plate body, and an L-shaped connection structure is formed between the edge of the cover plate body and the connecting flange. A positioning step is provided on the outer side of the end of the connecting flange away from the cover plate body, the side wall of the housing surrounds a circumference of the connecting flange and is embedded in the positioning step. The cover plate structure provided by the present disclosure can increase the area of connecting the inner side wall of the steel housing and the positioning step, so as to further improve the connection reliability of the steel cover plate and the steel housing, thereby improving the yield of welding the steel housing and the steel cover plate, which can prevent the welding position of the housing from being indented during welding and pressing by tooling.

FIG. 3

EP 4 787 561 A1

## Description

### CROSS-REFERENCE TO RELATED APPLICATION

The present disclosure claims priority to Chinese Patent Application No. 202311277374.3, filed with the China National Intellectual Property Administration on September 28, 2023, and entitled "COVER PLATE STRUCTURE AND BATTERY", which is incorporated herein by reference in its entirety.

### TECHNICAL FIELD

The present disclosure relates to the field of battery structures, and in particular, to a cover plate structure and a battery.

### BACKGROUND ART

In the technical field of power batteries, current mainstream battery cell housings are made of aluminum, and aluminum housings tend to rupture due to insufficient pressure resistance, causing ignition and explosion of battery cells. Steel housings have a strength far higher than that of aluminum housings, and can better address low strength of aluminum housings and battery cell rupture caused by thermal runaway.

To improve energy density, steel housings are thinner compared with aluminum housings. However, the coordination between thinner steel housings and steel cover plates is relatively difficult, which requires precise tooling and high welding accuracy, resulting in low yield and poor welding effect of steel housings and steel cover plates.

### SUMMARY

An objective of the present disclosure is to provide a cover plate structure and a battery, so as to provide a better welding effect between a steel housing and a steel cover plate, thereby increasing welding yield.

The present disclosure provides a cover plate structure configured to connect a battery housing, where the cover plate structure includes a cover plate body and a connecting flange;

a circle of the connecting flange is provided on a circumferential edge of the cover plate body, and an L-shaped connection structure is formed between an edge of the cover plate body and the connecting flange; and
a positioning step is provided on an outer side of one end of the connecting flange away from the cover plate body, and a side wall of the housing surrounds a circumference of the connecting flange and is embedded in the positioning step.

In the foregoing technical solution, further, the connecting flange and the cover plate body are integrally bent and formed from a uniform-thickness steel plate.

In the foregoing technical solution, further, a thickness of the uniform-thickness steel plate is between 0.3 mm and 1.0 mm.

In the foregoing technical solution, further, the connecting flange includes a bent portion and a limiting portion;

the bent portion is located between the circumferential edge of the cover plate body and the limiting portion to allow a curved transition between the cover plate body and the limiting portion; and
on an outer side of the limiting portion, the positioning step is formed between the bent portion and the limiting portion.

In the foregoing technical solution, further, the side wall of the housing is fitted around and surrounds the outer side of the limiting portion; and
a distance between an outer edge of the bent portion and the outer side of the limiting portion is adapted to a thickness of the side wall of the housing.

In the foregoing technical solution, further, a thickness of the side wall of the housing is between 0.1 mm and 0.2 mm.

In the foregoing technical solution, further, the thickness of the uniform-thickness steel plate is a, the distance between the outer edge of the bent portion and the outer side of the limiting portion is b, and $10\% \leq \frac{b}{a} \leq 67\%$.

In the foregoing technical solution, further, the positioning step between the bent portion and the limiting portion is formed by stamping, and one side end surface of the bent portion facing the housing is connected in contact with an end surface of the side wall of the housing facing the bent portion.

In the foregoing technical solution, further, in an axial direction of the connecting flange, a length of the limiting portion is between 0.5 mm and 2 mm.

The present disclosure further provides a battery, which includes the cover plate structure according to the foregoing technical solution.

Compared with the prior art, the present disclosure has the following beneficial effects.

The present disclosure provides a cover plate structure, which includes a cover plate body and a connecting flange. The connecting flange is cylindrical, and a shape of the connecting flange is adapted to a shape of the housing to ensure reliability of connection between the connecting flange and the housing. In an axial direction of the connecting flange, one end of the connecting flange is connected to a circumferential edge of the cover plate body.

At one end of the connecting flange away from the cover plate body, a positioning step is provided on an outer side of the connecting flange, and a side wall of the housing surrounds a circumference of the connecting flange and is embedded in the positioning step. That is, for the positioning step provided by the present disclosure, in a direction in which the steel cover plate and the steel housing face each other, a step height direction of the positioning step is the axial direction of the connecting flange, so that a step height of the positioning step is not limited by the thickness of the connecting flange.

In the direction in which the steel cover plate and the steel housing face each other, when the step height of the positioning step needs to be increased, a length of the connecting flange in the axial direction is correspondingly increased, thereby increasing an area of connection between an inner side of the side wall of the steel housing and the positioning step of the connecting flange, and further improving reliability of connection between the steel cover plate and the steel housing and preventing the welding position from being recessed inwards, which can prevent the welding position of the housing from being indented during welding and pressing by tooling.

The present disclosure further provides a battery, which includes the cover plate structure according to the foregoing technical solution. Based on the above analysis, the battery has the same beneficial effects. Details are not described herein again.

## BRIEF DESCRIPTION OF DRAWINGS

To describe the technical solutions in the embodiments of the present disclosure or in the prior art more clearly, the following briefly describes the drawings for describing specific implementations or the conventional technology. It is clear that the drawings in the following descriptions show merely some embodiments of the present disclosure, and those of ordinary skill in the art can still derive other drawings from these drawings without inventive efforts.

FIG. 1 is a schematic diagram of a structure of a cover plate structure provided by the present disclosure;

FIG. 2 is a schematic diagram of assembly of a steel cover plate and a housing provided by the present disclosure;

FIG. 3 is a partial schematic diagram of assembly of a steel cover plate and a housing provided by the present disclosure; and

FIG. 4 is a schematic processing diagram of a cover plate structure provided by the present disclosure.

Reference numerals: 101. cover plate body; 102. connecting flange; 103. housing; 104. electrode post; 105. riveting block; 106. upper plastic; 107. sealing ring; 108. lower plastic; 109. positioning step; 110. bent portion; 111. limiting portion; and 112. uniform-thickness steel plate.

## DETAILED DESCRIPTION OF EMBODIMENTS

The following clearly and completely describes the technical solutions of the present disclosure with reference to the drawings in the present disclosure. Apparently, the described embodiments are only a part rather than all of the embodiments of the present disclosure. All other embodiments obtained by those of ordinary skill in the art based on embodiments of the present disclosure without inventive efforts shall fall within the protection scope of the present disclosure.

In the description of the present disclosure, it should be noted that terms such as "center", "up", "down", "left", "right", "vertical", "horizontal", "inside", "outside" and the like refer to positional relationships based on the orientation or position shown in the drawings, which are for convenience of description and simplification only, and are not intended to indicate or imply that the devices or components must have a specific orientation or be constructed and operated in a specific orientation. Therefore, these terms should not be understood as limiting the present disclosure. In addition, the terms "first", "second", and "third" are merely intended for differentiated description, and should not be construed as an indication or an implication of relative importance.

In the description of the present disclosure, it should be noted that, unless otherwise explicitly specified or limited, the terms "mount", "connect", and "link" should be understood in a broad sense. For example, the terms can refer to fixed connection, detachable connection, or integral connection; can refer to mechanical connection or electrical connection;

can refer to direct connection or indirect connection through an intermediate medium; and can also refer to communication between two components internally. Those of ordinary skill in the art can interpret specific meanings of the foregoing terms in the present disclosure according to specific cases.

Embodiment 1

In the prior art, before connecting an aluminum housing and an aluminum cover plate, a step is generally stamped at one side edge of the aluminum cover plate facing the aluminum housing, so that a recessed portion is formed in a middle portion of the aluminum cover plate. During connection of the aluminum housing and the aluminum cover plate, a side wall at an opening of the aluminum housing is snapped into the step, and the recessed portion in the middle portion of the aluminum cover plate is inserted into the aluminum housing. A connection portion between the aluminum housing and the aluminum cover plate includes two parts: an end surface of the side wall of the aluminum housing and an edge of the aluminum housing, and the inner side of the side wall of the aluminum housing and a circumference of the recessed portion, where a step height of the step determines an area of connection between the inner side of the side wall of the aluminum housing and the recessed portion.

Because a thickness of the aluminum cover plate is relatively large, generally exceeding 1.0 mm, in a direction in which the aluminum cover plate and the aluminum housing face each other, the step height of the stamped step is also relatively high, so that an area of circumferential connection between the inner side of the side wall of the aluminum housing and the recessed portion of the aluminum cover plate is sufficient to ensure reliability of connection between the aluminum housing and the aluminum cover plate. However, for a steel cover plate with a relatively small thickness, due to the thin thickness, if a structure identical to that of the aluminum cover plate is used, a step height of a corresponding stamped step of the steel cover plate is relatively low, resulting in a smaller area of circumferential connection between the inner side of the side wall of the steel housing and the recessed portion of the steel cover plate, thereby reducing reliability of connection between the steel housing and the steel cover plate.

Therefore, the present disclosure provides a cover plate structure configured to connect a battery housing, which is capable of improving reliability of connection between the steel cover plate and the steel housing.

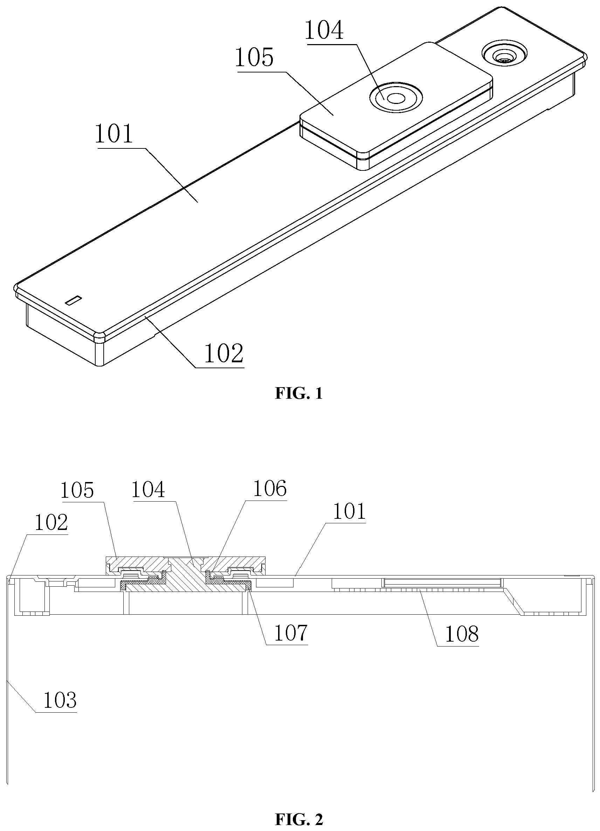

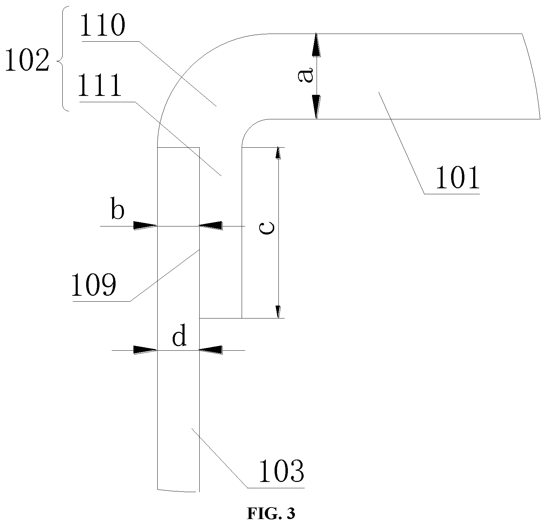

Referring to FIGS. 1 to 4, the cover plate structure includes a cover plate body 101 and a connecting flange 102. The cover plate body 101 is provided with components such as an electrode post 104, a riveting block 105, upper plastic 106, a sealing ring 107, and lower plastic 108. The connecting flange 102 is cylindrical, and a shape of the connecting flange 102 is adapted to a shape of the housing 103 to ensure reliability of connection between the connecting flange 102 and the housing 103. As shown in FIG. 3, a partial sectional view at a connection between an edge of the cover plate body 101 and the connecting flange 102 is illustrated, which shows that an L-shaped connection is formed between the edge of the cover plate body 101 and the connecting flange 102. In an axial direction of the connecting flange 102, one end of the connecting flange 102 is connected to a circumferential edge of the cover plate body 101. As shown in FIG. 1, the axial direction of the connecting flange 102 is perpendicular to the cover plate body 101.

At one end of the connecting flange 102 away from the cover plate body 101, a positioning step 109 is provided on an outer side of the connecting flange 102, and a side wall of the housing 103 surrounds a circumference of the connecting flange 102 and is embedded in the positioning step 109. That is, for the positioning step 109 provided in the present disclosure, in a direction in which the steel cover plate and the steel housing face each other, a step height direction of the positioning step 109 is the axial direction of the connecting flange 102, so that a step height of the positioning step 109 is not limited by the thickness of the connecting flange 102.

In the direction in which the steel cover plate and the steel housing face each other, when the step height of the positioning step 109 needs to be increased, a length of the connecting flange 102 in the axial direction is correspondingly increased, thereby increasing an area of connection between an inner side of the side wall of the steel housing and the positioning step 109 of the connecting flange 102, and further improving reliability of connection between the steel cover plate and the steel housing and preventing the welding position of the housing 103 from being indented during welding and pressing by tooling.

In an optional technical solution of this embodiment, the connecting flange 102 and the cover plate body 101 are integrally bent and formed from a uniform-thickness steel plate 112, so that the connecting flange 102 and the cover plate body 101 are integrated, which has high strength, resistance to deformation, and low processing difficulty.

In the prior art, a thickness of an aluminum housing is generally between 0.1 mm and 0.2 mm, specifically 0.1 mm, 0.13 mm, 0.15 mm, 0.18 mm, or 0.2 mm, such that the aluminum housing has a relatively large thickness. Considering that a density of steel is higher than that of aluminum, to reduce a weight of the battery cell, the present disclosure sets a thickness of the uniform-thickness steel plate 112 between 0.3 mm and 1.0 mm. Specifically, the thickness of the uniform-thickness steel plate 112 can be 0.3 mm, 0.4 mm, 0.6 mm, 0.85 mm, or 1.0 mm. The present disclosure reduces a thickness of the steel cover plate, thereby reducing dimensions of the battery.

In an optional technical solution of this embodiment, as shown in FIG. 3, the connecting flange 102 includes a bent portion 110 and a limiting portion 111. The limiting portion 111 is cylindrical, and a shape of the limiting portion 111 is adapted to a shape of the housing 103, such that the housing 103 is sleeved around an outer side of the limiting portion 111. The bent portion 110 serves as a transition structure connecting the cover plate body 101 and the limiting portion 111. Specifically, the bent portion 110 is located between a circumferential edge of the cover plate body 101 and the limiting portion 111 to allow a curved transition between the cover plate body 101 and the limiting portion 111. On an outer side of the limiting portion 111, the positioning step 109 is formed between the bent portion 110 and the limiting portion 111.

In an optional technical solution of this embodiment, a side wall of the housing 103 is fitted around and surrounds the outer side of the limiting portion 111, and a distance between an outer edge of the bent portion 110 and the outer side of the limiting portion 111 is adapted to a thickness of the side wall of the housing 103. When the housing 103 is connected to the steel cover plate, an outer surface of the side wall of the housing 103 can be flush with the outer edge of the bent portion 110, thereby improving an overall appearance of the battery formed by the connection.

In an optional technical solution of this embodiment, a thickness d of the side wall of the housing 103 is between 0.1 mm and 0.2 mm, and correspondingly, the distance between the outer edge of the bent portion 110 and the outer side of the limiting portion 111 is also between 0.1 mm and 0.2 mm.

In an optional technical solution of this embodiment, specifically, a thickness of the uniform-thickness steel plate 112 is set as a, the distance between the outer edge of the bent portion 110 and the outer side of the limiting portion 111 is set as b, and considering limitations of the manufacturing process and the thickness of the steel housing and the steel cover plate, $10\% \leq \dfrac{b}{a} \leq 67\%$ .

In an optional technical solution of this embodiment, the positioning step 109 between the bent portion 110 and the limiting portion 111 is formed by stamping, and one side end surface of the bent portion 110 facing the housing 103 is connected in contact with an end surface of the side wall of the housing 103 facing the bent portion 110.

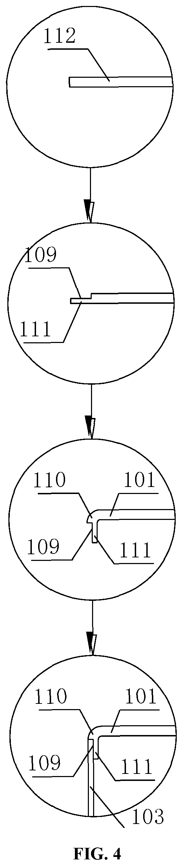

In this embodiment, as shown in FIG. 4, before bending the uniform-thickness steel plate 112 to form the cover plate body 101 and the connecting flange 102, the positioning step 109 is first stamped at the edge of the uniform-thickness steel plate 112, where a thinned portion of the positioning step 109 forms the limiting portion 111. Then, the uniform-thickness steel plate 112 is bent in a circumferential direction to form the connecting flange 102 provided with the positioning step 109. Because the stamped positioning step 109 does not have a rounded corner, the housing 103 can be closely fitted with one side end surface of the bent portion 110 facing the housing 103, thereby reducing a gap between the housing 103 and the bent portion 110 and facilitating firm welding, which prevents poor welding.

In an optional technical solution of this embodiment, in the axial direction of the connecting flange 102, a length c of the limiting portion 111 is between 0.5 mm and 2 mm, and the length of the limiting portion 111 can specifically be 0.1 mm, 0.13 mm, 0.15 mm, 0.18 mm, or 0.2 mm. In the axial direction of the connecting flange 102, the length of the limiting portion 111 corresponds to the step height of the positioning step 109. By setting the length c of the limiting portion 111 within the foregoing range, the area of connection between the inner side of the side wall of the steel housing and the positioning step 109 of the connecting flange 102 is sufficiently large, thereby ensuring reliable connection between the steel cover plate and the steel housing. In addition, indentation at a welding position of the housing 103 during welding and pressing by tooling can be prevented.

Referring to Table 1, the present disclosure specifically provides several sets of parameter data for the cover plate structure based on ranges of parameters of the cover plate structure, so as to compare actual connection performance between the steel cover plate and the housing.

Table 1

| Values | Example 1 | Example 2 | Example 3 | Example 4 | Example 5 | Comparative Example 1 | Comparative Example 2 | Comparative Example 3 |
|---|---|---|---|---|---|---|---|---|
| a | 0.4 | 0.55 | 0.6 | 0.85 | 1.0 | 0.4 | 0.4 | 1.2 |
| b | 0.2 | 0.18 | 0.15 | 0.13 | 0.1 | 0.3 | 0.2 | 0.1 |
| c | 0.5 | 0.8 | 1.2 | 1.8 | 2.0 | 0.5 | 0.3 | 1.8 |
| d | 0.2 | 0.18 | 0.15 | 0.13 | 0.1 | 0.3 | 0.2 | 0.1 |
| b a | 50% | 32.7% | 25% | 15.3% | 10% | 75% | 50% | 8.3% |
| Connection between the housing and the steel cover plate | OK | OK | OK | OK | OK | The thickness of the housing wall is excessively large, and the weight of the steel housing is excessively large; and consequently, a steel housing battery cell has no advantage and no significance compared with an aluminum housing battery cell. | The length of the limiting portion is excessively short; and consequently, effective support for the battery cell housing cannot be provided, and concavity and misalignment are prone to occur during welding when compression is applied by a tooling fixture. | The thickness of the cover plate is excessively large; and consequently, overall weight of a battery cell is excessively large, and a battery cell using a steel cover plate has no advantage and no significance compared with a battery cell using an aluminum cover plate. |

It can be seen that the structure of the steel cover plate provided by the present disclosure is beneficial for adaptive installation with a steel housing, avoids occurrence of concavity of a battery cell housing or misalignment between a housing and a cover plate during welding when compression is applied by a tooling fixture, which facilitates fitting between a housing and a cover plate, and avoids generation of a gap, so as to prevent influence on welding yield.

Embodiment 2

Embodiment 2 of the present disclosure provides a battery, which includes the cover plate structure according to any one of the foregoing embodiments, and therefore has all beneficial technical effects of the cover plate structure according to any one of the foregoing embodiments. Details are not described herein again.

Finally, it should be noted that the foregoing embodiments are merely intended for describing the technical solutions of the present disclosure other than limiting the present disclosure. Although the present disclosure is described in detail with reference to the foregoing embodiments, those of ordinary skill in the art should understand that modifications can still be made to the technical solutions described in the foregoing embodiments or equivalent replacements can still be made to some or all technical features thereof, without departing from the scope of the technical solutions of embodiments of the present disclosure. In addition, those skilled in the art should understand that although some embodiments described herein include certain features of other embodiments rather than other features, the combination of features from different embodiments falls within the scope of the present disclosure and constitutes different embodiments.

**Claims**

1. A cover plate structure, configured to connect a battery housing, wherein the cover plate structure comprises a cover plate body and a connecting flange;

   a circle of the connecting flange is provided on a circumferential edge of the cover plate body, and an L-shaped connection structure is formed between an edge of the cover plate body and the connecting flange; and
   a positioning step is provided on an outer side of one end of the connecting flange away from the cover plate body, and a side wall of the housing surrounds a circumference of the connecting flange and is embedded in the positioning step.

2. The cover plate structure according to claim 1, wherein the connecting flange and the cover plate body are integrally bent and formed from a uniform-thickness steel plate.

3. The cover plate structure according to claim 2, wherein a thickness of the uniform-thickness steel plate is between 0.3 mm and 1.0 mm.

4. The cover plate structure according to claim 2, wherein the connecting flange comprises a bent portion and a limiting portion;

   the bent portion is located between the circumferential edge of the cover plate body and the limiting portion to allow a curved transition between the cover plate body and the limiting portion; and
   on an outer side of the limiting portion, the positioning step is formed between the bent portion and the limiting portion.

5. The cover plate structure according to claim 4, wherein the side wall of the housing is fitted around and surrounds the outer side of the limiting portion; and
   a distance between an outer edge of the bent portion and the outer side of the limiting portion is adapted to a thickness of the side wall of the housing.

6. The cover plate structure according to claim 5, wherein a thickness of the side wall of the housing is between 0.1 mm and 0.2 mm.

7. The cover plate structure according to claim 5, wherein a thickness of the uniform-thickness steel plate is a, the distance between the outer edge of the bent portion and the outer side of the limiting portion is b, and

$$10\% \leq \frac{b}{a} \leq 67\% .$$

8. The cover plate structure according to claim 5, wherein the positioning step between the bent portion and the limiting portion is formed by stamping, and one side end surface of the bent portion facing the housing is connected in contact with an end surface of the side wall of the housing facing the bent portion.

9. The cover plate structure according to claim 5, wherein in an axial direction of the connecting flange, a length of the limiting portion is between 0.5 mm and 2 mm.

10. A battery, comprising the cover plate structure according to any one of claims 1 to 9

**FIG. 1**

**FIG. 2**

**FIG. 3**

**FIG. 4**

## INTERNATIONAL SEARCH REPORT

| International application No. |
| --- |
| **PCT/CN2024/093497** |

| A. | CLASSIFICATION OF SUBJECT MATTER |
| --- | --- |
| | H01M50/147(2021.01)i; H01M50/169(2021.01)i |

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNTXT, DWPI, WPABS, ENTXT, CNKI: 电池, 盖板, 弯折, 限位, 卡位, 台, 凸, 焊接, battery, cover, bend, clamp, step, weld

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117199651 A (SVOLT ENERGY TECHNOLOGY CO., LTD.) 08 December 2023 (2023-12-08) claims 1-10, description, paragraphs 34-55, and figures 1-4 | 1-10 |
| X | CN 219329315 U (CHANGZHOU RED FAIRY PRECISION TECHNOLOGY CO., LTD.) 11 July 2023 (2023-07-11) description, paragraphs 5-50, and figures 8-9 | 1-10 |
| X | CN 101785131 A (TOYOTA MOTOR CORP.) 21 July 2010 (2010-07-21) description, paragraphs 45-81, and figures 1-10 | 1-10 |
| A | CN 211182258 U (YIXING HUIHUA CLADDING MATERIAL CO., LTD.) 04 August 2020 (2020-08-04) entire document | 1-10 |
| A | US 2018287102 A1 (SCHULER PRESSEN GMBH) 04 October 2018 (2018-10-04) entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 August 2024** | **21 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/093497**

| Patent document cited in search report | | | Publication date (day/month/year) | Patent family member(s) | | | Publication date (day/month/year) |
|---|---|---|---|---|---|---|---|
| CN | 117199651 | A | 08 December 2023 | None | | | |
| CN | 219329315 | U | 11 July 2023 | None | | | |
| CN | 101785131 | A | 21 July 2010 | JP | 4210961 | B1 | 21 January 2009 |
| | | | | JP | 2009026707 | A | 05 February 2009 |
| | | | | KR | 20100007916 | A | 22 January 2010 |
| | | | | KR | 101034057 | B1 | 12 May 2011 |
| | | | | EP | 2172993 | A1 | 07 April 2010 |
| | | | | EP | 2172993 | A4 | 15 January 2014 |
| | | | | EP | 2172993 | B1 | 19 August 2015 |
| | | | | WO | 2009014068 | A1 | 29 January 2009 |
| | | | | US | 2010190053 | A1 | 29 July 2010 |
| | | | | US | 8431269 | B2 | 30 April 2013 |
| CN | 211182258 | U | 04 August 2020 | CN | 110880564 | A | 13 March 2020 |
| US | 2018287102 | A1 | 04 October 2018 | DE | 102015110244 | A1 | 29 December 2016 |
| | | | | WO | 2016207027 | A1 | 29 December 2016 |
| | | | | CN | 107851739 | A | 27 March 2018 |
| | | | | KR | 20180040574 | A | 20 April 2018 |

Form PCT/ISA/210 (patent family annex) (July 2022)

**REFERENCES CITED IN THE DESCRIPTION**

**Patent documents cited in the description**

- CN 202311277374